# EUROPEAN PATENT APPLICATION

(11) **EP 4 760 630 A1**
(43) Date of publication of application: **17.06.2026**
(21) Application number: 24864221.7
(22) Date of filing: 03.07.2024
(51) Int. Cl.: G06T 1/20

(54) **CHIP SYSTEM, IMAGE PROCESSING METHOD AND ELECTRONIC DEVICE**

(30) Priority: 13.09.2023 CN 202311188058
(71) Applicant: HUAWEI TECHNOLOGIES CO., LTD., Shenzhen 518129 (CN)
(72) Inventor: ZHANG, Linjian, Shenzhen, Guangdong 518129 (CN); YUAN, Zhengjun, Shenzhen, Guangdong 518129 (CN); LIU, Lingfei, Shenzhen, Guangdong 518129 (CN)
(74) Representative: MERH-IP Matias Erny Reichl Hoffmann Patentanwälte PartG mbB
(86) International application number: PCT/CN2024/103440
(87) International publication number: WO 2025/055496

(57) **Abstract**

Embodiments of this application provide a chip system, an image processing method, and an electronic device, and are applied to the field of chip image processing technologies. The chip system includes a graphics processing unit, a neural-network processing unit, and a scheduling circuit. The graphics processing unit is configured to output a first rendered image based on an image subtask. The scheduling circuit is configured to indicate, based on a scheduling subtask, the neural-network processing unit to obtain the first rendered image. The neural-network processing unit is configured to: based on a computing subtask, perform neural network algorithm processing on the first rendered image, and output a computing result. The scheduling circuit is further configured to indicate, based on the scheduling subtask, the graphics processing unit to obtain the computing result. The graphics processing unit is further configured to perform image processing on the computing result based on the image subtask to obtain a second rendered image. In embodiments of this application, image processing is performed based on multi-IP coordination to improve imaging quality. This manner reduces power consumption and processing complexity of the chip system, and is applicable to different chip architectures.

## Description

This application claims priority to Chinese Patent Application No. 202311188058.9, filed with the China National Intellectual Property Administration on September 13, 2023 and entitled "CHIP SYSTEM, IMAGE PROCESSING METHOD, AND ELECTRONIC DEVICE", which is incorporated herein by reference in its entirety.

### TECHNICAL FIELD

This application relates to the field of chip image processing technologies, and in particular, to a chip system, an image processing method, and an electronic device.

### BACKGROUND

A chip system includes a graphics processing unit. An image task is executed by using the graphics processing unit, to render and generate an image that needs to be imaged and displayed. Currently, in some high-power-consumption chip architectures (for example, a desktop end based on an X86 architecture), complex image rendering algorithm processing is usually performed on an image in the graphics processing unit to achieve better imaging quality. However, complex image rendering algorithm processing greatly increases power consumption of the graphics processing unit. An improvement manner is as follows: A design inside the graphics processing unit is changed to add a neural network processing circuit to the graphics processing unit. Image rendering and AI algorithm processing are performed in a closed-loop manner inside the graphics processing unit to obtain a rendered image with higher imaging quality. Although this manner can reduce power consumption, an IP core of the graphics processing unit needs to be changed in this manner, and an area of the graphics processing unit is increased. In addition, the neural network processing circuit in the graphics processing unit cannot be shared with another multimedia service.

However, in a medium- and low-power-consumption chip architecture (for example, a mobile end based on an ARM architecture), there is an extremely high requirement on a component area and power consumption of a chip. Operations such as reducing complexity and a processing amount of an image rendering algorithm usually need to be performed to reduce power consumption of the chip. Therefore, in the medium- and low-power-consumption chip architecture, it is difficult to improve imaging quality by using the method of improving image rendering algorithm processing complexity or in the manner of adding the neural network processing circuit. With technology updating and iteration of electronic products, a user has an increasing requirement for imaging quality of a displayed image. How to obtain a rendered image with higher imaging quality in chip architectures with different power consumption and different hardware designs is a big challenge.

### SUMMARY

Embodiments of this application provide a chip system, an image processing method, and an electronic device, which reduces power consumption of the chip system while improving imaging quality of a rendered image, and may be applicable to different chip architectures.

To achieve the foregoing objectives, the following technical solutions are used in embodiments of this application.

According to a first aspect, a chip system is provided. The chip system includes a graphics processing unit, a neural-network processing unit, and a scheduling circuit. The graphics processing unit is configured to output a first rendered image based on an image subtask. The scheduling circuit is configured to indicate, based on a scheduling subtask, the neural-network processing unit to obtain the first rendered image. The neural-network processing unit is configured to: based on a computing subtask, perform neural network algorithm processing on the first rendered image, and output a computing result. The scheduling circuit is further configured to indicate, based on the scheduling subtask, the graphics processing unit to obtain the computing result. The graphics processing unit is further configured to perform image processing on the computing result based on the image subtask to obtain a second rendered image.

In this embodiment of this application, the scheduling circuit indicates the graphics processing unit and the neural-network processing unit to perform multi-IP coordination processing, to generate a rendered image with a superior imaging parameter. A specific operation of multi-IP coordination processing is as follows: The graphics processing unit executes the image subtask to perform rendering processing on an imaging image to obtain the first rendered image. The neural-network processing unit performs neural network algorithm processing on the first rendered image to obtain the computing result, to complete a computing operation of parameter optimization. Then, the graphics processing unit obtains the second rendered image based on the computing result. One or more imaging parameters of the second rendered image are superior to that or those of the first rendered image. In this processing manner: First, in this application, the neural-network processing unit is used to assist in improving imaging quality of a rendered image based on a neural network processing algorithm. Compared with an operation of improving imaging quality by using a more complex image rendering algorithm in the graphics processing unit, this embodiment of this application can greatly reduce image processing complexity and improve imaging quality. Then, the neural-network processing unit and the graphics processing unit are components independent of each other, and data path interaction and control signal interaction between the neural-network processing unit and the graphics processing unit are quite complex. In addition, software control logic of the neural-network processing unit and the graphics processing unit is simple. In this embodiment of this application, a hardware scheduling circuit is disposed, so that image processing, based on multi-IP coordination, between the neural-network processing unit and the graphics processing unit can be implemented in a simple control manner. Finally, in this solution does not require hardware redesign or the like performed on each chip in the chip system, and may be applicable to chip architectures with different power consumption and different designs.

In a possible implementation, the graphics processing unit is further configured to: when outputting the first rendered image, output a first trigger signal to the scheduling circuit based on the image subtask. The scheduling circuit is specifically configured to output a second trigger signal to the neural-network processing unit based on the scheduling subtask in response to the first trigger signal, where the second trigger signal indicates the neural-network processing unit to obtain the first rendered image. The graphics processing unit is further configured to: when outputting the computing result, output a third trigger signal to the scheduling circuit based on the image subtask. The scheduling circuit is specifically configured to output a fourth trigger signal to the graphics processing unit based on the scheduling subtask in response to the third trigger signal, where the fourth trigger signal indicates the graphics processing unit to obtain the computing result. In this embodiment of this application, scheduling of subtasks with different execution sequences in multi-IP coordination processing may be completed by using only several trigger signals. The scheduling manner is simple and quick.

In a possible implementation, the chip system further includes a storage circuit. The graphics processing unit is specifically configured to: write the first rendered image into the storage circuit; and obtain the computing result from the storage circuit in response to the fourth trigger signal. The neural-network processing unit is specifically configured to: based on the computing subtask in response to the second trigger signal, read the first rendered image from a first buffer, and write the computing result into the storage circuit. In this embodiment of this application, the storage circuit is used to store, for transfer, the first rendered image and the computing result that are exchanged between the neural-network processing unit and the graphics processing unit, so that multi-IP coordination processing can be more sequentially performed.

In a possible implementation, the graphics processing unit is further configured to: generate the initial rendered image based on the image subtask; and obtain a plurality of first rendered images based on the initial rendered image, where the plurality of first rendered images correspond to different imaging parts of the initial rendered image. In this embodiment of this application, when the graphics processing unit and the neural-network processing unit collaboratively perform image processing, a situation in which a processing delay of one party is large, causing the other party to wait for feedback may exist. In this case, a complete imaging frame may be split into a plurality of first rendered images. The graphics processing unit and the neural-network processing unit perform the multi-IP coordination processing operation on the plurality of first rendered images in a pipeline manner, so that processing performance of the graphics processing unit and the neural-network processing unit can be effectively utilized, and a processing delay of each complete frame can be reduced.

In a possible implementation, the computing result is an image processing coefficient. The graphics processing unit is further configured to: obtain at least one preprocessed image based on the first rendered image; and process the first rendered image and the at least one preprocessed image based on the image processing coefficient to obtain the second rendered image. In this embodiment of this application, the neural-network processing unit needs to be used to perform related computing on the image processing coefficient. A data computing amount of the neural-network processing unit is small, and a requirement on a computational power of the neural-network processing unit is low. In addition, the neural-network processing unit may quickly output the image processing coefficient used as the computing result.

In a possible implementation, the computing result is a processed image. The graphics processing unit is further configured to obtain at least one preprocessed image based on the first rendered image. The neural-network processing unit is specifically configured to perform neural network algorithm processing on the first rendered image based on the at least one preprocessed image to obtain the processed image. In this embodiment of this application, the graphics processing unit may perform image processing to generate one or more preprocessed images. The preprocessed image is used to assist in optimizing an image parameter. While inputting the first rendered image, the neural-network processing unit further inputs the at least one preprocessed image. The neural-network processing unit performs neural network algorithm processing on the at least one preprocessed image and the first rendered image to obtain the processed image. The processed image is an image obtained after imaging parameter optimization. The neural-network processing unit outputs the processed image as the computing result. In this embodiment of this application, the neural-network processing unit may be used to perform neural network computing to directly obtain the processed image obtained after imaging parameter optimization, and then output the processed image as the computing result to the graphics processing unit. The graphics processing unit performs related rendered image post-processing based on the processed image to obtain the second rendered image. In this implementation, a requirement on a computational power of the neural-network processing unit is slightly higher. In addition, processing time of the neural-network processing unit is also longer. However, a processing amount of the graphics processing unit is greatly reduced.

In a possible implementation, the chip system further includes a processor. The processor is configured to: output the image subtask, the computing subtask, and the scheduling subtask, where a heterogeneous synchronization signal is set for at least one of the image subtask, the computing subtask, or the scheduling subtask, and the heterogeneous synchronization signal indicates an execution dependency relationship between the image subtask and the scheduling subtask, or the heterogeneous synchronization signal indicates an execution dependency relationship between the computing subtask and the scheduling subtask. In this embodiment of this application, when each subtask is encapsulated, a corresponding heterogeneous synchronization signal is inserted based on a processing sequence of the subtask, and an execution dependency relationship between different subtasks is formed based on the heterogeneous synchronization signal. In this implementation, the graphics processing unit, the neural-network processing unit, and the like can directly schedule and execute a corresponding subtask based on the execution dependency relationship without changing the graphics processing unit, the neural-network processing unit, and the like too much in a software perspective.

In a possible implementation, the processor is further configured to generate an image rendering task group in response to a rendering command input by an application, where the image rendering task group includes the image subtask, the computing subtask, and the scheduling subtask. In this embodiment of this application, an application vendor collaboratively designs the rendering command. In this case, a parameter of a related subtask that needs to be executed by a plurality of hardware-based IPs has been adaptively set in a delivered rendering command. A corresponding image rendering task group may be directly generated according to the rendering command. The image rendering task group already includes the image subtask, the computing subtask, and the scheduling subtask.

In a possible implementation, the processor is further configured to: generate an image rendering task group in response to a rendering command input by an application, where the image rendering task group includes the image subtask; and set the computing subtask and the scheduling subtask in the image rendering task group. In this embodiment of this application, an application vendor does not change the rendering command. In this case, the rendering command does not include parameters and the like related to a plurality of subtasks for image processing based on multi-IP coordination. Because the rendering command is not changed, the image rendering task group generated by the processor according to the rendering command includes only the image subtask related to image rendering, and does not include subtasks related to the neural-network processing unit and the scheduling circuit. In this case, the processor needs to be used to set the computing subtask and the scheduling subtask.

In some examples, when setting the computing subtask in the image rendering task group, the processor is specifically configured to perform at least one of the following: changing at least one image subtask to the computing subtask, or adding a new computing subtask to the image rendering task group. In this embodiment of this application, some image subtasks that are originally executed by the graphics processing unit may be changed into computing subtasks, or some computing subtasks may be newly added.

In some examples, the processor is further configured to add the new image subtask to the image rendering task group. In this embodiment of this application, in some application scenarios, some image subtasks further need to be added, to implement multi-IP coordination processing.

In some possible implementations, different imaging parameters of a rendered image may be optimized based on different neural network algorithm processing.

For example, the second rendered image meets at least one of the following: a resolution of the second rendered image is greater than a resolution of the first rendered image, or a frame rate of the second rendered image is greater than a frame rate of the first rendered image.

According to a second aspect, an embodiment of this application further provides an image processing method. The method is based on a chip system. The chip system includes a graphics processing unit, a neural-network processing unit, and a scheduling circuit. The method includes: The graphics processing unit outputs a first rendered image based on an image subtask; the scheduling circuit indicates, based on a scheduling subtask, the neural-network processing unit to obtain the first rendered image; based on a computing subtask, the neural-network processing unit performs neural network algorithm processing on the first rendered image, and outputs a computing result; the scheduling circuit further indicates, based on the scheduling subtask, the graphics processing unit to obtain the computing result; and the graphics processing unit further performs image processing on the computing result based on the image subtask to obtain a second rendered image.

In a possible implementation, the method further includes: When outputting the first rendered image, the graphics processing unit outputs a first trigger signal to the scheduling circuit based on the image subtask; the scheduling circuit outputs a second trigger signal to the neural-network processing unit based on the scheduling subtask in response to the first trigger signal, where the second trigger signal indicates the neural-network processing unit to obtain the first rendered image; when outputting the computing result, the graphics processing unit outputs a third trigger signal to the scheduling circuit based on the image subtask; and the scheduling circuit outputs a fourth trigger signal to the graphics processing unit based on the scheduling subtask in response to the third trigger signal, where the fourth trigger signal indicates the graphics processing unit to obtain the computing result.

In a possible implementation, the method further includes: The graphics processing unit generates an initial rendered image based on the image subtask, and obtains a plurality of first rendered images based on the initial rendered image, where the plurality of first rendered images correspond to different imaging parts of the initial rendered image.

In a possible implementation, the computing result is an image processing coefficient. The method further includes: The graphics processing unit obtains at least one preprocessed image based on the first rendered image. Outputting the second rendered image based on the computing result includes: The graphics processing unit processes the first rendered image and the at least one preprocessed image based on the image processing coefficient to obtain the second rendered image.

In a possible implementation, the computing result is a processed image. The method further includes: The graphics processing unit obtains at least one preprocessed image based on the first rendered image. Performing neural network algorithm processing on the first rendered image to obtain the computing result includes: The neural-network processing unit performs neural network algorithm processing on the first rendered image based on the at least one preprocessed image to obtain the processed image.

In a possible implementation, the method further includes: outputting the image subtask, the computing subtask, and the scheduling subtask, where a heterogeneous synchronization signal is set for at least one of the image subtask, the computing subtask, or the scheduling subtask, and the heterogeneous synchronization signal indicates an execution dependency relationship between the image subtask and the scheduling subtask, or the heterogeneous synchronization signal indicates an execution dependency relationship between the computing subtask and the scheduling subtask.

In a possible implementation, the method further includes: generating an image rendering task group in response to a rendering command input by an application, where the image rendering task group includes the image subtask, the computing subtask, and the scheduling subtask.

In a possible implementation, the method further includes: generating an image rendering task group in response to a rendering command input by an application, where the image rendering task group includes the image subtask; and setting the computing subtask and the scheduling subtask in the image rendering task group.

In a possible implementation, setting the computing subtask in the image rendering task group includes: performing at least one of the following operations: changing at least one image subtask to the computing subtask, or adding a new computing subtask to the image rendering task group.

In a possible implementation, the method further includes: inserting the new image subtask into the image rendering task group.

In a possible implementation, the second rendered image meets at least one of the following: a resolution of the second rendered image is greater than a resolution of the first rendered image, or a frame rate of the second rendered image is greater than a frame rate of the first rendered image.

According to a third aspect, an embodiment of this application further provides an electronic device. The electronic device includes a circuit board and the chip system described in the first aspect, and the chip system is disposed on the circuit board.

According to a fourth aspect, an embodiment of this application further provides a computer-readable storage medium. The computer-readable storage medium includes instructions. When the instructions are run on the electronic device described in the third aspect, the electronic device is enabled to perform the image processing method described in the second aspect.

For technical principles and beneficial effects of the second aspect, the third aspect, and the fourth aspect, refer to related descriptions of the first aspect. Details are not described herein again.

### BRIEF DESCRIPTION OF DRAWINGS

FIG. 1 is a diagram of a structure of an electronic device according to an embodiment of this application;
FIG. 2 is a diagram of a structure of a first chip system according to an embodiment of this application;
FIG. 3 is a diagram of another structure of a first chip system according to an embodiment of this application;
FIG. 4 is a diagram 1 of a structure of a second chip system according to an embodiment of this application;
FIG. 5 is a diagram 2 of a structure of a second chip system according to an embodiment of this application;
FIG. 6 is a diagram 3 of a structure of a second chip system according to an embodiment of this application;
FIG. 7 is a diagram 4 of a structure of a second chip system according to an embodiment of this application;
FIG. 8 is a schematic flowchart 1 of an image processing method according to an embodiment of this application;
FIG. 9 is a schematic flowchart 2 of an image processing method according to an embodiment of this application;
FIG. 10 is a diagram of a delay of an image processing method when an imaging frame is not split according to an embodiment of this application;
FIG. 11 is a diagram of a delay of an image processing method when an imaging frame is split according to an embodiment of this application;
FIG. 12 is a schematic flowchart of inter-chip processing of neural network algorithm processing according to an embodiment of this application;
FIG. 13 is a schematic flowchart 3 of an image processing method according to an embodiment of this application;
FIG. 14 is a diagram of a software architecture of a processor according to an embodiment of this application;
FIG. 15 is a schematic flowchart 4 of an image processing method according to an embodiment of this application;
FIG. 16 is a schematic flowchart 5 of an image processing method according to an embodiment of this application; and
FIG. 17 is a diagram of software scheduling of a second graphics processing unit according to an embodiment of this application.

### DESCRIPTION OF EMBODIMENTS

It should be noted that the terms "first", "second", and the like in embodiments of this application are merely used to distinguish between features of a same type, and cannot be understood as an indication of relative importance, a quantity, a sequence, or the like.

The term "example", "for example", or the like in embodiments of this application is used to represent an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

The terms "coupling" and "connection" in embodiments of this application should be understood in a broad sense. For example, the terms may mean a physical direct connection, or may mean an indirect connection implemented through an electronic component, for example, a connection implemented through a resistor, an inductor, a capacitor, or another electronic component.

Some basic concepts involved in this application are first described.

Electronic design automation (electronic design automation, EDA) is a design manner of using computer-aided design (computer-aided design, CAD) software to complete flows such as function design, synthesis, verification, and physical design (including arrangement, cabling, layout, design rule check, and the like) for an integrated circuit chip.

An intellectual property (intellectual property, IP) core plays a very important role in the EDA, and may be understood as a pre-designed circuit functional module in an integrated circuit. With development of complex semiconductors and communication technologies, research and development of integrated circuits are gradually carried out. Rapid improvement of chip integration enables more IP cores to be integrated on a single chip, to further form a chip system. The chip system has chip architectures of different forms, to be applied to different application scenarios. In a high-power-consumption application scenario, a high-power-consumption chip architecture with a large area may be designed, for example, a chip system based on an X86 architecture (the X86 architecture). Because the high-power-consumption chip architecture has high processing performance, and also has a large chip area and high processing power consumption, the high-power-consumption chip architecture may usually be applied to a computer, a high-performance data processing device, and the like. In a medium- and low-power-consumption application scenario, a medium- and low-power-consumption chip architecture may be designed, for example, a chip system based on an advanced reduced instruction set computing machines (advanced RISC machines, ARM) architecture. Because the medium- and low-power-consumption chip architecture has a small chip area and low processing power consumption, the medium- and low-power-consumption chip architecture may usually be applied to a mobile and portable data processing device, for example, a mobile phone or a tablet computer. However, in some application scenarios, some computer products also use the chip system that is based on the ARM architecture. An example in which the chip system is a system-on-a-chip (system-on-a-chip, SoC) is used. The SoC may integrate homogeneous or heterogeneous IP cores such as a central processing unit (central processing unit, CPU), a graphics processing unit (graphics processing unit, GPU), a neural-network processing unit (neural-network processing unit, NPU), a digital signal processor (digital signal processor, DSP), a microcontroller unit (microcontroller unit, MCU), a memory (memory), an analog-to-digital converter (analog-to-digital converter, ADC), a digital-to-analog converter (digital-to analog converter, DAC), a universal asynchronous receiver/transmitter (universal asynchronous receiver/transmitter, UART) circuit, and software and hardware modules that implement a dedicated customization function. Therefore, a chip system may include a plurality of different IP cores. Data communication and exchange between different IP cores has become one of the key technologies in a SoC chip design.

Image rendering (rendering) is a process of converting three-dimensional light energy transport processing into a two-dimensional rendered image. Usually, a graphics processing unit in a chip system is used to implement image rendering. A scene and an entity are represented in a three-dimensional form in a process of image rendering, which is closer to the real world and is easy to manipulate and transform. Most display devices of a rendered image are two-dimensional raster displays and dot matrix printers. Image rendering may be considered as rasterization. A raster display may be considered as a pixel matrix, and any graphic displayed on the raster display is actually a set of pixels with one or more colors and grayscale values. Rendering is one of the most important techniques in computer graphics. Currently, image rendering has important applications in various fields, such as gaming and entertainment, film and television animation, architectural design, education and healthcare, digital twin modeling, and artificial intelligence interaction. With development of science and technology, people have higher requirements on imaging quality of the rendered image. For example, in terms of game imaging, the rendered image is required to have functions such as ray tracing (ray tracing, RT), deep learning super sampling (deep learning super sampling, DLSS), artificial intelligence (artificial intelligence, AI), and Reflex low latency. Ray tracing makes the rendered image more realistic and may achieve more lighting effects than rasterization. To achieve better imaging quality, engineers continuously optimize various imaging parameters (such as a resolution, a frame rate, and a special effect) of the rendered image by using software, hardware, and the like. The resolution is used as an example, and may be classified into a low resolution (low resolution, LR), a high resolution (high resolution, HR), a super resolution (super resolution, SR), and the like in ascending order.

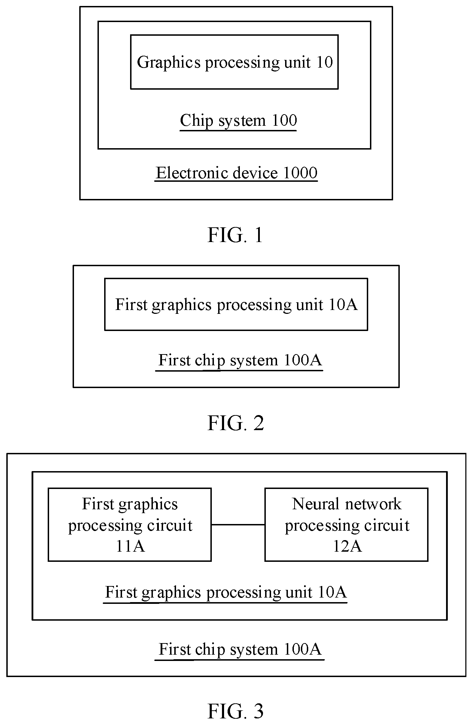

An embodiment of this application provides an electronic device. As shown in FIG. 1, the electronic device 1000 includes a circuit board (not shown in the figure) and a chip system 100. The chip system 100 is disposed on the circuit board. As shown in FIG. 1, the chip system 100 includes a graphics processing unit 10. The graphics processing unit 10 is configured to generate, based on an image task, an imaged rendered image used for display.

In some possible implementations, the chip system 100 is a first chip system based on a high-power-consumption chip architecture.

In some examples, to improve imaging quality of a rendered image of the first chip system, as shown in FIG. 2, the first chip system 100A includes a first graphics processing unit 10A. A more complex image rendering algorithm is used in the first graphics processing unit 10A to obtain a rendered image with higher imaging quality. However, in this embodiment of this application, using the more complex image rendering algorithm greatly increases power consumption of the first graphics processing unit 10A. Therefore, this solution is not applicable to the medium- and low-power-consumption chip system 100.

In some examples, as shown in FIG. 3, the first graphics processing unit 10A includes a first graphics processing circuit 11A and a neural network processing circuit 12A. In the first graphics processing unit 10A, a rendered image is generated by using the first graphics processing circuit 11A, and artificial intelligence (artificial intelligence, AI) algorithm processing is performed on the rendered image by using the neural network processing circuit 12A, to obtain a rendered image with higher imaging quality. In this embodiment of this application, the neural network processing circuit 12A configured to implement an AI algorithm is additionally designed and integrated in the first graphics processing unit 10A, to implement image rendering and AI algorithm processing inside the first graphics processing unit 10A. Compared with a manner in which the more complex image rendering algorithm is used in the embodiment in FIG. 2, in a manner in which imaging quality of a rendered image is improved by using the AI algorithm, image rendering load can be reduced to reduce computing power consumption of a component, the image has a good anti-aliasing effect, and the like. In addition, rendering and AI processing are performed in a closed-loop manner inside the first graphics processing unit 10A, and task scheduling overheads of the first graphics processing unit 10A are low and a data path is simple. However, in this manner, an IP core of the first graphics processing unit 10A needs to be redesigned, and introduction of the neural network processing circuit 12A increases an area of the first graphics processing unit 10A. Therefore, although power consumption of the first graphics processing unit 10A can be reduced by using this solution, this solution is not applicable to a medium- and low-power-consumption chip architecture. In the medium- and low-power-consumption chip architecture, there is also an extremely high requirement on a component area of a chip. In addition, in this solution, the IP core of the first graphics processing unit 10A needs to be modified and designed, which increases difficulty in using the solution, and cannot be applied to the chip system 100 that is based on another IP core.

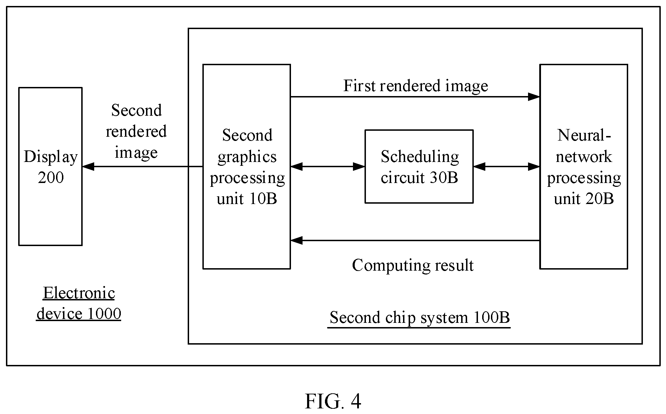

In some possible implementations, the chip system 100 may be a second chip system 100B that implements image rendering and AI algorithm processing based on multi-IP coordination. In this case, the second chip system 100B may be of a high-power-consumption chip architecture, or may be of a medium- and low-power-consumption chip architecture. As shown in FIG. 4, the second chip system 100B includes a second graphics processing unit 10B, a neural-network processing unit 20B, and a scheduling circuit 30B. The second graphics processing unit 10B is configured to output a first rendered image based on an image subtask. The scheduling circuit 30B is configured to indicate, based on a scheduling subtask, the neural-network processing unit 20B to obtain the first rendered image. The neural-network processing unit 20B is configured to: based on a computing subtask, perform neural network algorithm processing on the first rendered image, and output a computing result. The scheduling circuit 30B is further configured to: indicate, based on the scheduling subtask, the second graphics processing unit 10B to obtain the computing result. The second graphics processing unit 10B is further configured to perform image processing on the computing result based on the image subtask to obtain a second rendered image.

In a conventional chip architecture, the graphics processing unit 10 and the neural-network processing unit 20B are IP cores independent of each other. In addition, in a common chip design, the graphics processing unit 10 and the neural-network processing unit 20B are mainly used as auxiliary components that assist in implementing image data processing and data computing processing. The two chips are weak in terms of logic control capabilities. However, a data amount and a control signal that need to be exchanged are also quite complex to implement collaborative image processing between the graphics processing unit 10 and the neural-network processing unit 20B. Therefore, it is difficult to implement collaborative image data processing between the two IPs. In this embodiment of this application shown in FIG. 4, the second graphics processing unit 10B generates the first rendered image based on the image subtask. After the second graphics processing unit 10B outputs the first rendered image, the scheduling circuit 30B indicates the neural-network processing unit 20B to obtain the first rendered image. After obtaining the first rendered image, the neural-network processing unit 20B performs AI algorithm processing (for example, neural network algorithm processing) on the first rendered image to obtain the computing result. In this case, the scheduling circuit 30B indicates the second graphics processing unit 10B to obtain the computing result. The second graphics processing unit 10B generates a final rendered image, namely, the second rendered image, based on a computing result. Imaging quality of the second rendered image is higher than imaging quality of the first rendered image. The scheduling circuit 30B is disposed to schedule, via hardware, tasks between a plurality of IPs (including the second graphics processing unit 10B and the neural-network processing unit 20B) for execution. In this implementation, IP core designs of the second graphics processing unit 10B and the neural-network processing unit 20B do not need to be changed, and can be implemented in different chip architectures (for example, an X86 architecture or an ARM architecture). Compared with using a more complex rendering algorithm to improve imaging quality, AI algorithm processing performed based on the existing neural-network processing unit 20B in the chip architecture improves imaging quality of a rendered image, and also greatly reduces power consumption of the second chip system 100B. This makes the solution be applicable to chip architectures with different power consumption. Meanwhile, the hardware-based scheduling circuit 30B controls an execution sequence in which the second graphics processing unit 10B executes the image subtask and the neural-network processing unit 20B executes the computing subtask. A scheduling manner is simple, and the second graphics processing unit 10B and the neural-network processing unit 20B only need to exchange the first rendered image and the computing result, which avoids interaction of complex data signals and control signals between a plurality of IPs.

In some possible implementations, as shown in FIG. 4, the electronic device 1000 further includes a display 200. The display 200 is configured to display the second rendered image.

For example, the second chip system 100B may be of an X86 architecture, or may be of an ARM architecture. For example, the second chip system 100B may be a very large scale integrated circuit (very large scale integration circuit, VLSI), for example, a system-on-a-chip (system-on-a-chip, SoC) or a network on chip (network on chip, NoC).

For example, the second graphics processing unit 10B may be a GPU, and the neural-network processing unit 20B may be an NPU.

For example, the electronic device 1000 may be a mobile device, or may be a device-side device. For example, the electronic device 1000 may be a mobile phone, a tablet computer, a smartwatch, a television, a vehicle-mounted control device, a smart home device, or the like.

In some possible implementations, the scheduling circuit 30B may exchange a trigger signal related to task execution with the second graphics processing unit 10B and the neural-network processing unit 20B, to indicate the second graphics processing unit 10B and the neural-network processing unit 20B to perform a related task operation.

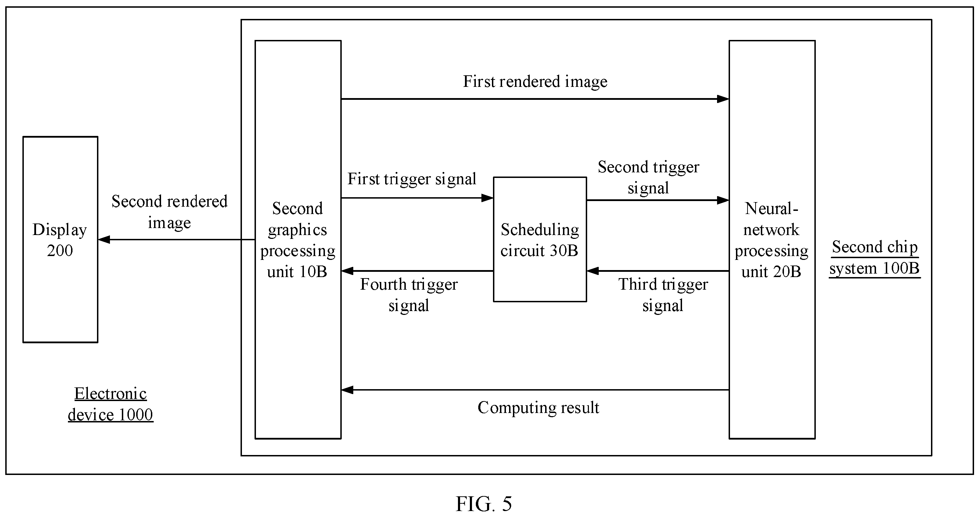

For example, as shown in FIG. 5, the second graphics processing unit 10B is further configured to: when outputting the first rendered image, output a first trigger signal to the scheduling circuit 30B based on the image subtask. The scheduling circuit 30B is specifically configured to output a second trigger signal to the neural-network processing unit 20B based on the scheduling subtask in response to the first trigger signal. The second trigger signal indicates the neural-network processing unit 20B to obtain the first rendered image. The second graphics processing unit 10B is further configured to: when outputting the computing result, output a third trigger signal to the scheduling circuit 30B based on the image subtask. The scheduling circuit 30B is specifically configured to output a fourth trigger signal to the second graphics processing unit 10B based on the scheduling subtask in response to the third trigger signal, where the fourth trigger signal indicates the second graphics processing unit 10B to obtain the computing result. In this embodiment of this application, after generating a related rendered image based on the image subtask, the second graphics processing unit 10B outputs the first rendered image, and then outputs the first trigger signal to the scheduling circuit 30B. The scheduling circuit 30B outputs the second trigger signal to the neural-network processing unit 20B in response to the received first trigger signal. The neural-network processing unit 20B receives, in response to the second trigger signal, the first rendered image output by the second graphics processing unit 10B, and performs AI algorithm processing (that is, neural network algorithm processing) on the first rendered image to obtain the computing result. While outputting the computing result, the neural-network processing unit 20B outputs the third trigger signal to the scheduling circuit 30B. The scheduling circuit 30B outputs the fourth trigger signal to the second graphics processing unit 10B in response to the third trigger signal. The second graphics processing unit 10B obtains the computing result in response to the fourth trigger signal, and obtains the second rendered image based on the computing result. In this embodiment of this application, only several trigger signals are required to complete scheduling of the second graphics processing unit 10B and the neural-network processing unit 20B, to implement multi-IP coordination processing. The trigger signals involved in this embodiment may be notification signals or indication signals, and are used to control or notify another IP core to perform a next operation. Implementation forms of the trigger signals are not limited in this embodiment.

In some possible implementations, the first rendered image or the computing result may be stored by using a buffer inside the second graphics processing unit 10B or the neural-network processing unit 20B.

In some possible implementations, to facilitate orderly coordinated processing between the second graphics processing unit 10B and the neural-network processing unit 20B, a general-purpose or dedicated storage circuit may be disposed in the second chip system 100B. The first rendered image and the computing result are stored in the storage circuit, to facilitate transfer and interaction of the first rendered image and the computing result between the second graphics processing unit 10B and the neural-network processing unit 20B.

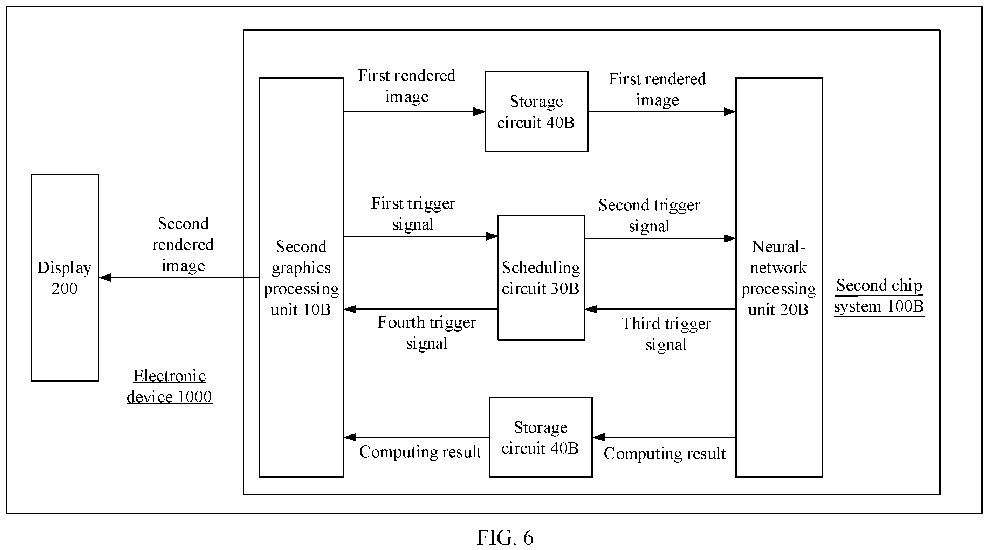

For example, as shown in FIG. 6, the second chip system 100B further includes a storage circuit 40B. The second graphics processing unit 10B outputs the first rendered image to the storage circuit 40B, and outputs the first trigger signal to the scheduling circuit 30B. The scheduling circuit 30B outputs the second trigger signal to the neural-network processing unit 30B based on the first trigger signal. After the second trigger signal is input, the neural-network processing unit 30B obtains the first rendered image from the storage circuit 40B in response to the second trigger signal, and performs neural network computing processing on the first rendered image to obtain the computing result; and then stores the computing result in the storage circuit 40B, and outputs the third trigger signal to the scheduling circuit 30B. The scheduling circuit 30B outputs the fourth trigger signal to the second graphics processing unit 10B based on the third trigger signal. After the fourth trigger signal is input, in response to the fourth trigger signal, the second graphics processing unit 10B obtains the computing result from the storage circuit 40B, and then obtains the second rendered image based on the computing result.

For example, the storage circuit 40B may be an on-chip system cache (system cache, SC). In some examples, the first rendered image and the computing result may be stored in different storage areas of a same storage circuit 40B. In some examples, the first rendered image and the computing result may be stored in different storage circuits 40B.

In some possible implementations, at least one of a plurality of imaging parameters of the second rendered image is better than an imaging parameter of the first rendered image. Depending on different imaging parameters, different neural network algorithm processing may be performed in the neural-network processing unit 20B to optimize a corresponding imaging parameter. In some examples, the neural-network processing unit 20B may perform AI super-resolution algorithm processing, so that a resolution of the second rendered image is greater than a resolution of the first rendered image. In some examples, the neural-network processing unit 20B may perform AI frame interpolation algorithm processing, so that a frame rate of the second rendered image is greater than a frame rate of the first rendered image. It should be understood that super-resolution and frame interpolation are two application scenarios of this technical solution, and actual application is not limited thereto.

In some possible implementations, the neural-network processing unit 20B may obtain, through neural network algorithm processing, the computing result used as an image processing coefficient. The second graphics processing unit 10B processes the first rendered image based on the image processing coefficient to obtain the second rendered image.

For example, the second graphics processing unit 10B is further configured to: obtain at least one preprocessed image based on the first rendered image; and process the first rendered image and the at least one preprocessed image based on the image processing coefficient to obtain the second rendered image. In this embodiment of this application, while generating the first rendered image, the second graphics processing unit 10B may further perform image processing to generate one or more preprocessed images. The preprocessed image is used to assist in optimizing an image parameter. After the neural-network processing unit 20B outputs the image processing coefficient, the second graphics processing unit 10B may process the first rendered image and the at least one preprocessed image based on the image processing coefficient to obtain the second rendered image. In this embodiment of this application, the neural-network processing unit 20B needs to be used to perform related computing on the image processing coefficient. A data computing amount of the neural-network processing unit 20B is small, and a requirement on a computational power of the neural-network processing unit 20B is low. In addition, the neural-network processing unit 20B may quickly output the image processing coefficient used as the computing result.

In some possible implementations, the neural-network processing unit 20B may obtain, through neural network algorithm processing, a processed image whose imaging parameter is optimized through neural network algorithm processing, and output the processed image as the computing result. The second graphics processing unit 10B performs some image rendering post-processing operations on the processed image to obtain the second rendered image.

For example, the second graphics processing unit 10B is further configured to: obtain at least one preprocessed image based on the first rendered image. The neural-network processing unit 20B is specifically configured to perform neural network algorithm processing on the first rendered image based on the at least one preprocessed image to obtain the processed image. In this embodiment of this application, while generating the first rendered image, the second graphics processing unit 10B may further perform image processing to generate one or more preprocessed images. The preprocessed image is used to assist in optimizing an image parameter. While inputting the first rendered image, the neural-network processing unit 20B further inputs the at least one preprocessed image. The neural-network processing unit 20B performs neural network algorithm processing on the at least one preprocessed image and the first rendered image to obtain the processed image. The processed image is an image obtained after imaging parameter optimization. The neural-network processing unit 20B outputs the processed image as the computing result. In this embodiment of this application, the neural-network processing unit 20B may be used to perform neural network computing to directly obtain the processed image obtained after imaging parameter optimization, and then output the processed image as the computing result to the second graphics processing unit 10B. The second graphics processing unit 10B performs related rendered image post-processing based on the processed image to obtain the second rendered image. In this embodiment of this application, a requirement on a computational power of the neural-network processing unit 20B is slightly higher. In addition, processing time of the neural-network processing unit 20B is also longer. However, a processing amount of the second graphics processing unit 10B is reduced.

In some possible implementations, each first rendered image is a complete imaging frame image. In this embodiment of this application, the second graphics processing unit 10B generates an initial rendered image based on the image subtask, where each initial rendered image corresponds to the complete imaging frame image, and outputs each initial rendered image as the first rendered image. The second graphics processing unit 10B and the neural-network processing unit 20B process the first rendered image based on multi-IP coordination, to obtain the second rendered image that is obtained after the imaging parameter is optimized. In this implementation, each first rendered image needs to first undergoes intermediate processing from the second graphics processing unit 10B to the neural-network processing unit 20B, and then undergoes intermediate processing from the neural-network processing unit 20B to the second graphics processing unit 10B. Therefore, in this intermediate processing process, limited by processing performance of the neural-network processing unit 20B, there may be a waiting delay that the second graphics processing unit 10B waits for the neural-network processing unit 20B to output the computing result. Alternatively, limited by processing performance of the second graphics processing unit 10B, there may be a waiting delay that the neural-network processing unit 20B waits for the second graphics processing unit 10B to output a next first rendered image or a waiting delay for outputting a first rendered image corresponding to a next initial rendered image.

In some possible implementations, a plurality of first rendered images correspond to a complete imaging frame image. For example, the second graphics processing unit 10B is further configured to: generate an initial rendered image based on the image subtask; and obtain a plurality of first rendered images based on the initial rendered image, where the plurality of first rendered images correspond to different imaging parts of the initial rendered image. In this embodiment of this application, the second graphics processing unit 10B generates the complete imaging frame image (that is, the initial rendered image) based on the image subtask. The second graphics processing unit 10B then splits each initial rendered image into a plurality of rendered sub-images, namely, a plurality of first rendered images, and then output the plurality of first rendered images. The neural-network processing unit 20B sequentially performs neural network algorithm processing on each first rendered image, and outputs a corresponding computing result. The second graphics processing unit 10B receives the computing result corresponding to each first rendered image, and performs processing based on the computing result to obtain a corresponding second rendered image, and finally stitch a plurality of second rendered images corresponding to the plurality of first rendered images to obtain a final complete frame image. In some examples, there is no same imaging part between a plurality of first rendered images corresponding to a same initial rendered image. In some examples, there may be a part of same imaging parts between a plurality of first rendered images corresponding to a same initial rendered image.

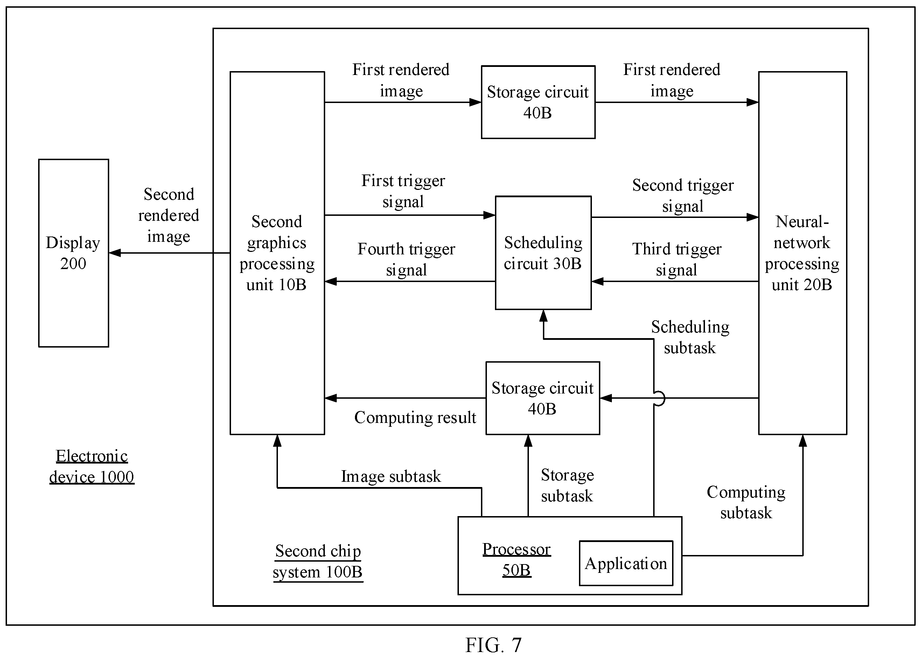

In some possible implementations, as shown in FIG. 7, the second chip system 100B further includes a processor 50B. An application (application, APP) runs on the processor 50B. When a rendered image needs to be displayed, the application delivers a rendering command. The processor 50B is configured to output the image subtask, the computing subtask, and the scheduling subtask in response to the rendering command delivered by the application. A heterogeneous synchronization signal is set for at least one of the image subtask, the computing subtask, or the scheduling subtask. The heterogeneous synchronization signal indicates an execution dependency relationship between the image subtask and the scheduling subtask, or the heterogeneous synchronization signal indicates an execution dependency relationship between the computing subtask and the scheduling subtask. In this embodiment of this application, the processor 50B outputs a plurality of subtasks with an execution dependency relationship. In an actual image processing procedure, the second graphics processing unit 10B, the neural-network processing unit 20B, and the scheduling circuit 30B may cancel, based on a received trigger signal, a related dependency relationship of a subtask that needs to be processed, to execute the corresponding subtask.

In some possible implementations, depending on rendering commands delivered by the application, the processor 50B generates the image subtask, the computing subtask, and the scheduling subtask in different manners.

In some examples, an application vendor collaboratively designs the rendering command. In this case, the rendering command already includes parameters related to a plurality of subtasks of multi-IP coordination for image processing, and the like. In this case, the processor 50B is further configured to generate an image rendering task group in response to the rendering command input by the application, where the image rendering task group includes the image subtask, the computing subtask, and the scheduling subtask. In this embodiment of this application, the application vendor may work with a hardware vendor. When designing the application, the application vendor modifies a design of a rendering command delivered by the application. A parameter of a related subtask that needs to be executed by a plurality of hardware-based IPs has been adaptively set in a delivered rendering command. A corresponding image rendering task group may be directly generated according to the rendering command. The image rendering task group already includes the image subtask, the computing subtask, and the scheduling subtask. In this case, only the heterogeneous synchronization signal needs to be inserted into a corresponding subtask by using an SDK software program. After the image subtask, the computing subtask, and the scheduling subtask are output, a plurality of IPs coordinate to implement image processing based on corresponding subtasks and heterogeneous synchronization signals. In this solution, the processor 50B does not need to change or generate some subtasks, thereby reducing a processing amount of the processor 50B and the like.

In some examples, an application vendor does not change the rendering command. In this case, the rendering command does not include parameters and the like related to a plurality of subtasks for image processing based on multi-IP coordination. In this case, the processor 50B is further configured to: generate an image rendering task group in response to a rendering command input by an application, where the image rendering task group includes the image subtask; and set the computing subtask and the scheduling subtask in the image rendering task group. In this embodiment of this application, because the rendering command is not changed, the image rendering task group generated by the processor 50B according to the rendering command includes only the image subtask related to image rendering, and does not include subtasks related to the neural-network processing unit 20B and the scheduling circuit 30B. In this case, the processor 50B needs to be used to set the computing subtask and the scheduling subtask.

In some possible implementations, the application may be a game application, a model design application, a drawing software application, a video clip application, or the like.

In some examples, when the application runs, the second chip system 100B may automatically execute the content recorded in the foregoing embodiments. In some examples, when the application runs, the second chip system 100B starts to execute the content recorded in the foregoing embodiments in response to an input of a user. For example, a control switch is disposed on the electronic device 1000, and a function recorded in the foregoing embodiments is enabled or disabled by using the control switch. Alternatively, a human-computer interaction module (for example, the display 200) is disposed on the electronic device 1000, and a control operation performed by the user on the human-computer interaction module is used to enable or disable the function recorded in the foregoing embodiments.

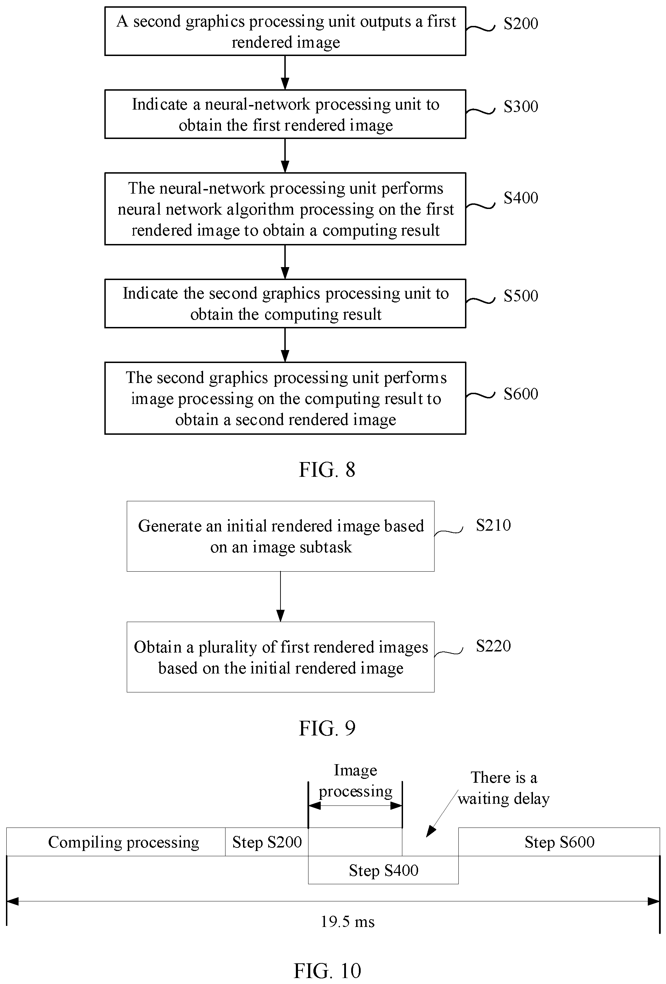

Based on the second chip system 100B including the structure in FIG. 4, FIG. 5, FIG. 6, or FIG. 7, an image processing method shown in FIG. 8 and recorded in the following steps S200 to S600 may be performed.

S200: The second graphics processing unit 10B outputs a first rendered image.

In this embodiment of this application, as shown in FIG. 4, FIG. 5, FIG. 6, and FIG. 7, the second graphics processing unit 10B performs image rendering processing based on an image subtask to obtain the first rendered image.

For example, when outputting the first rendered image, the second graphics processing unit 10B outputs a first trigger signal to the scheduling circuit 30B based on the image subtask. The first trigger signal indicates the neural-network processing unit 20B to execute a subsequent corresponding scheduling subtask.

S300: Indicate the neural-network processing unit 20B to obtain the first rendered image.

In some possible implementations, as shown in FIG. 4, FIG. 5, FIG. 6, and FIG. 7, the second graphics processing unit 10B obtains the first rendered image after performing preliminary image rendering image processing. Then, the scheduling circuit 30B indicates, based on a scheduling subtask, the neural-network processing unit 20B to obtain the first rendered image.

For example, the scheduling circuit 30B outputs a second trigger signal to the neural-network processing unit 20B based on the scheduling subtask in response to the first trigger signal, where the second trigger signal indicates the neural-network processing unit 20B to obtain the first rendered image.

S400: The neural-network processing unit 20B performs neural network algorithm processing on the first rendered image to obtain a computing result.

In some possible implementations, as shown in FIG. 4, FIG. 5, FIG. 6, and FIG. 7, the neural-network processing unit 20B performs, in response to indication of the scheduling circuit 30B, neural network algorithm processing on the first rendered image that is obtained by the second graphics processing unit 10B through preliminary rendering processing, and obtains the computing result through neural network algorithm processing.

For example, the neural-network processing unit 20B obtains the first rendered image based on the second trigger signal, and performs neural network algorithm processing on the first rendered image to obtain the computing result. When outputting the computing result, the second graphics processing unit 10B outputs a third trigger signal to the scheduling circuit 30B based on the image subtask. The third trigger signal indicates the scheduling circuit 30B to execute a subsequent related scheduling subtask.

S500: Indicate the second graphics processing unit 10B to obtain the computing result.

In some possible implementations, the scheduling circuit 30B indicates, based on the scheduling subtask, the second graphics processing unit 10B to obtain the computing result.

For example, the scheduling circuit 30B outputs a fourth trigger signal to the second graphics processing unit 10B based on the scheduling subtask in response to the third trigger signal. The fourth trigger signal indicates the second graphics processing unit 10B to obtain the computing result.

S600: The second graphics processing unit 10B performs image processing on the computing result to obtain a second rendered image.

In some possible implementations, the second graphics processing unit 10B performs image processing on the computing result based on the image subtask to obtain the second rendered image. An imaging parameter of the second rendered image is better than an imaging parameter of the first rendered image.

For example, the second graphics processing unit 10B executes a related image subtask in response to the fourth trigger signal, to perform image processing on the computing result to obtain the second rendered image.

In this embodiment of this application, by using the image processing method shown in FIG. 8, coordination between the second graphics processing unit 10B and the neural-network processing unit 20B can be implemented to optimize an imaging parameter of a rendered image. In this processing process, performing neural network algorithm processing by using the neural-network processing unit 20B can improve the imaging parameter of the rendered image. In addition, compared with a manner of improving the imaging parameter of the rendered image by using more complex image rendering algorithm processing in the second graphics processing unit 10B, this solution can reduce power consumption of the second chip system 100B. In addition, because the second graphics processing unit 10B and the neural-network processing unit 20B are independent of each other, direct coordination processing between the second graphics processing unit 10B and the neural-network processing unit 20B requires quite complex data path interaction and control signal interaction on a control link. In this embodiment of this application, the scheduling circuit 30B is disposed to schedule coordination processing between the second graphics processing unit 10B and the neural-network processing unit 20B in a hardware-based scheduling manner. In this implementation, complex hardware or software modification does not need to be performed on a plurality of IPs. The second graphics processing unit 10B and the neural-network processing unit 20B may be controlled, through only several simple trigger signals, to execute corresponding subtasks in a predetermined sequence, to complete optimization of the imaging parameter of the rendered image based on multi-IP coordination.

In some possible implementations, in step S200 in the embodiment shown in FIG. 8, each first rendered image is a complete imaging frame image.

In some possible implementations, in step S200 in the embodiment shown in FIG. 8, a plurality of first rendered images correspond to a complete imaging frame image. In this case, step S200 further includes the following sub-operations of step S210 and step S220 shown in FIG. 9.

S210: Generate an initial rendered image based on the image subtask.

In some possible implementations, the second graphics processing unit 10B generates the initial rendered image based on the image subtask. The initial rendered image is the complete imaging frame image.

S220: Obtain a plurality of first rendered images based on the initial rendered image.

In this embodiment of this application, the plurality of first rendered images correspond to different imaging parts of the initial rendered image.

In the embodiment shown in FIG. 9, for each first rendered image, operations of step S300 to step S500 shown in FIG. 8 may be performed. In step S600, a second rendered image corresponding to the complete imaging frame image is obtained based on the computing result and the plurality of first rendered images corresponding to the complete imaging frame image.

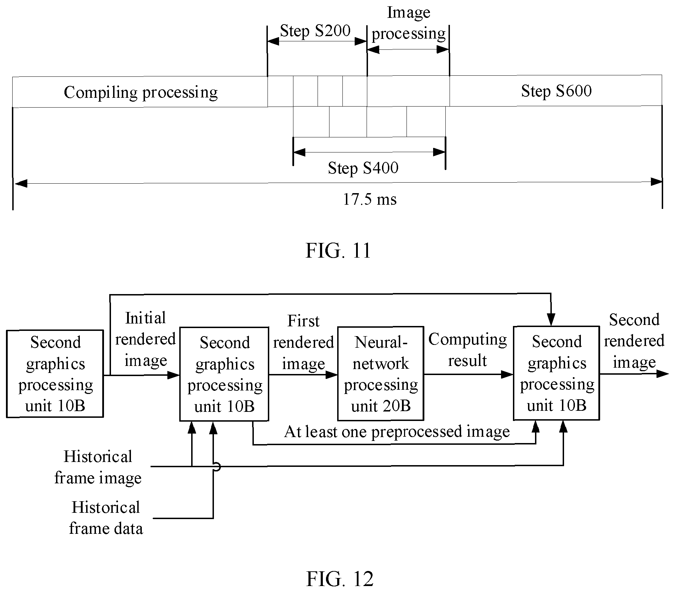

In this embodiment of this application, FIG. 10 shows a delay of performing optimization processing on each imaging frame image when the first rendered image is the complete imaging frame image. It can be learned from FIG. 10 that the second graphics processing unit 10B first performs compilation processing. After that, the second graphics processing unit 10B performs initial rendering processing in step S200 to obtain the first rendered image. After that, the neural-network processing unit 20B performs neural network algorithm processing in step S400 to obtain the computing result. Then, the second graphics processing unit 10B performs a subsequent rendering processing operation in step S600, and obtains, based on the computing result, the second rendered image that is obtained after parameter optimization. In this case, a processing delay of each complete imaging frame image is approximately 19.5 ms. FIG. 11 is a diagram of a processing pipeline corresponding to the embodiment shown in FIG. 9. In the embodiment shown in FIG. 9, when the initial rendered image that is a complete imaging frame image is split into a plurality of first rendered images, operations of step S300 to step S500 are sequentially performed on the plurality of first rendered images. Then, in step S600, the second rendered image is obtained based on the computing result and the plurality of first rendered images corresponding to a same initial rendered image. An example in which one initial rendered image is split into four first rendered images is used. In the example shown in FIG. 11, the four first rendered images are processed in a pipeline manner, which reduces a processing delay by 2 ms, and improves delay gains by about 10.3%. When the embodiments shown in FIG. 9 and FIG. 11 are used, processing performance of the second graphics processing unit 10B and the neural-network processing unit 20B may be more properly utilized, and a waiting delay for waiting for processing is reduced as much as possible.

In some possible implementations, the image processing method further includes: The second graphics processing unit 10B obtains at least one preprocessed image based on the first rendered image. In some examples, the at least one preprocessed image may be a preprocessed image obtained based on the first rendered image in a phase of step S100. In some examples, the at least one preprocessed image may be an image obtained by the second graphics processing unit 10B by performing some image processing operations in parallel when the neural-network processing unit 20B performs step S400 in the embodiments shown in FIG. 10 and FIG. 11. In some examples, the at least one preprocessed image may be a preprocessed image obtained by directly processing the first rendered image. In some examples, the at least one preprocessed image may be a preprocessed image obtained by processing the initial rendered image and then splitting a preprocessed initial rendered image based on a distribution relationship of the plurality of first rendered images on the initial rendered image.

In some possible implementations, as shown in FIG. 10 and FIG. 11, when the neural-network processing unit 20B performs an operation of step S400, the second graphics processing unit 10B may alternatively perform some image processing operations in parallel, and process the first rendered image, the initial rendered image, or the at least one preprocessed image by using the image processing operations, to obtain some adjusted images or the like. For example, the image processing operation may be binning image processing.

In some possible implementations, in step S400, computing results obtained vary according to different neural network algorithms.

In some examples, the computing result is an image processing coefficient. In this case, a specific operation of step S600 is: processing the first rendered image and the at least one preprocessed image based on the image processing coefficient to obtain the second rendered image. In this embodiment of this application, a computing result obtained by performing neural network algorithm processing in step S400 is the image processing coefficient. In this implementation, a data processing amount of the neural-network processing unit 20B is small, and requirements on a computational power and a processing delay of the neural-network processing unit 20B are low. In step S600, the second graphics processing unit 10B performs image processing on the obtained first rendered image and at least one preprocessed image based on the image processing coefficient. For example, when the image processing coefficient is a fusion coefficient, fusion processing is performed on the first rendered image and the at least one preprocessed image based on the image processing coefficient, to obtain the second rendered image with a super resolution.

In some examples, the computing result is a processed image. The processed image is an image that is obtained after the neural-network processing unit 20B performs neural network algorithm processing in step S400 and after an imaging parameter is optimized. In this case, a specific operation of step S400 is: The neural-network processing unit 20B performs neural network algorithm processing on the first rendered image based on the at least one preprocessed image to obtain the processed image. A specific operation of step S600 is: The second graphics processing unit 10B performs rendering post-processing on the processed image that is used as the computing result, to obtain the second rendered image. In this embodiment of this application, the neural-network processing unit 20B directly generates, in the operation of step S400, the image obtained after parameter optimization. Then, the second graphics processing unit 10B performs rendering post-processing on the generated processed image to obtain a final second rendered image. In this implementation, a data processing amount of the second graphics processing unit 10B is reduced.

In this embodiment of this application, based on a performance difference, a processing delay difference, and the like between the second graphics processing unit 10B and the neural-network processing unit 20B during actual application, the computing result in any one of the foregoing forms may be selected as an actual implementation solution.

For example, as shown in FIG. 12, the second graphics processing unit 10B generates the initial rendered image based on the image subtask, and processes the initial rendered image to obtain the first rendered image and the at least one preprocessed image. The neural-network processing unit 20B performs neural network algorithm processing on the first rendered image to obtain the computing result that is the image processing coefficient. The second graphics processing unit 10B obtains the second rendered image based on the initial rendered image (or the first rendered image), the image processing coefficient (that is, the computing result), and the at least one preprocessed image. In some examples, in a process of obtaining the first rendered image and/or obtaining the at least one preprocessed image, the second graphics processing unit 10B may further use a previous historical frame image, historical frame data, and the like. In a process of obtaining the second rendered image, the second graphics processing unit 10B may further use a previous historical frame image and the like.

For example, the at least one preprocessed image may be an image obtained by directly processing the first rendered image, or may be an image indirectly obtained by using the first rendered image. In some examples, the at least one preprocessed image may include an upsampled image. The upsampled image is an unbiased upsampled large image that is obtained by performing upsampling on the first rendered image (or a corresponding initial rendered image) based on jitter offset coordinates. In some examples, the at least one preprocessed image may include a warp image. The warp image is an image obtained by performing, based on a motion vector (motion vector, MV) and depth information, a warp operation on a previous complete frame image corresponding to the first rendered image.

In some possible implementations, at least one of the following parameters may be further used in processing in step S200, step S400, or step S600: parameters such as jitter offset coordinates of a current frame, color data of the current frame, color data of a historical frame (or a previous frame), a motion vector, depth information, and a neural network filter (neural network filter, NNF).

The foregoing description of neural network algorithm processing is merely an example. During actual application, a parametric image of a corresponding type may be generated as the at least one preprocessed image depending on different neural network algorithms used. Preprocessed images may be used in the neural-network processing unit 20B, or may be used in the second graphics processing unit 10B. Some other image processing parameters may also be added during image processing to assist in processing. A used neural network algorithm is not limited in embodiments of this application. Theoretically, any imaging parameter optimization algorithm may be adaptively applied to the solution recorded in embodiments of this application.

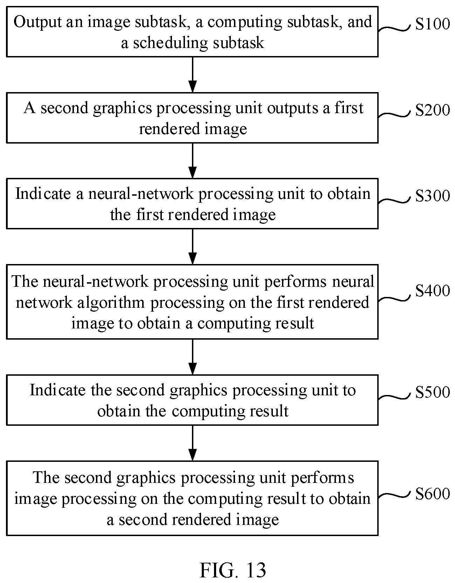

In some possible implementations, as shown in FIG. 13, the image processing method further includes an operation of step S100.

S100: Output the image subtask, the computing subtask, and the scheduling subtask.

In this embodiment of this application, as shown in FIG. 7, the processor 50B separately outputs the image subtask, the computing subtask, and the scheduling subtask. A heterogeneous synchronization signal is set for at least one of the image subtask, the computing subtask, or the scheduling subtask, and the heterogeneous synchronization signal indicates an execution dependency relationship between the image subtask and the scheduling subtask, or the heterogeneous synchronization signal indicates an execution dependency relationship between the computing subtask and the scheduling subtask.

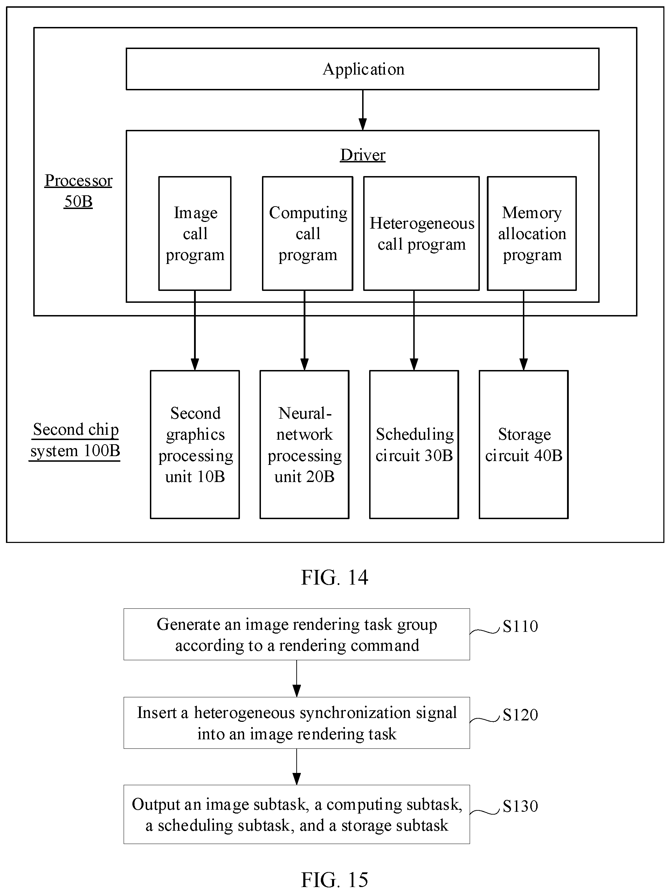

For example, as shown in FIG. 14, an application and a driver run in the processor 50B. In the driver, there are call programs corresponding to different IP cores, for example, an image call program, a computing call program, a heterogeneous call program, and a memory allocation program. The application delivers a rendering command. An application programming interface (application programming interface, API) required for related task processing is called according to the rendering command, to call the driver. Based on the called API, the driver encapsulates and sends the image subtask to the second graphics processing unit 10B through the image call program, encapsulates and sends the computing subtask to the neural-network processing unit 20B through the computing call program, and encapsulates and sends the scheduling subtask to the scheduling circuit 30B through the heterogeneous call program. In this process, when the storage circuit 40B is needed for auxiliary storage of data such as the first rendered image and the computing result, a storage subtask may be further sent to the storage circuit 40B through the memory allocation program, to allocate corresponding storage space to different hardware-based IPs.

For example, the API may include a GLES service, a Vulkan service, and the like.

For example, an example in which the optimized image parameter is the resolution is used, and the driver may be a super-resolution SDK program. A deep learning super sampling (deep learning super sampling, DLSS) driver can be designed as the super-resolution SDK.

In some examples, the heterogeneous synchronization signal is set in the image subtask. The heterogeneous synchronization signal may indicate the second graphics processing unit 10B to output the first trigger signal when the first rendered image is output, and trigger, through the first trigger signal, the scheduling circuit 30B to execute a related scheduling subtask (for example, output the second trigger signal). Alternatively, the heterogeneous synchronization signal indicates the second graphics processing unit 10B to execute a related image subtask when the fourth trigger signal is received, to output the second rendered image based on the computing result. In some examples, the heterogeneous synchronization signal is set in the scheduling subtask. The heterogeneous synchronization signal indicates the scheduling circuit 30B to execute the related scheduling subtask, to output the second trigger signal to the neural-network processing unit 20B when the first trigger signal is received. The heterogeneous synchronization signal may further indicate the scheduling circuit 30B to execute a related scheduling subtask, to output the fourth trigger signal to the second graphics processing unit 10B when the third trigger signal is received. In some examples, the heterogeneous synchronization signal is set in the computing subtask. The heterogeneous synchronization signal may indicate the neural-network processing unit 20B to perform a related computing subtask (for example, perform AI algorithm processing on the first rendered image) when the third trigger signal is received, or indicate the neural-network processing unit 20B to output the third trigger signal to the scheduling circuit 30B when the computing result is output.

In some examples, a software development kit (software development kit, SDK) may be set in the processor 50B. The SDK generates an API logic graph based on the API called by the rendering command, determines processing execution dependencies of different subtasks based on the API logic graph, and inserts heterogeneous synchronization information into corresponding subtasks based on the determined processing execution dependency relationships.

In some possible implementations, depending on rendering commands delivered by the application, the processor 50B generates the image subtask, the computing subtask, and the scheduling subtask in different manners.

In some examples, an application vendor collaboratively designs the rendering command. In this case, the rendering command already includes parameters related to a plurality of subtasks of multi-IP coordination for image processing, and the like. In this case, step S100 includes the following sub-operations of step S110 to step S130 shown in FIG. 15.

S110: Generate an image rendering task group according to the rendering command.

In this embodiment of this application, because the application vendor collaboratively designs the rendering command, the processor 50B may directly call a related API according to the rendering command, to encapsulate and generate a corresponding image subtask, a computing subtask, a scheduling subtask, a storage subtask, and the like.

S120: Insert the heterogeneous synchronization signal into an image rendering task.

In this embodiment of this application, after the image rendering task group including subtasks such as the image subtask, the computing subtask, the scheduling subtask, and the storage subtask is generated according to rendering command, the image rendering task group does not include an execution dependency relationship between subtasks executed by different IPs. The heterogeneous synchronization signal needs to be inserted into a corresponding subtask, to construct the execution dependency relationship between the subtasks executed by different IPs.

S130: Output the image subtask, the computing subtask, the scheduling subtask, and the storage subtask.

In the embodiment shown in FIG. 15 of this application, for content of a technical principle and technical effects of the embodiment in which the application vendor collaboratively designs the rendering command, refer to related descriptions in the foregoing hardware embodiments. Details are not described herein again.

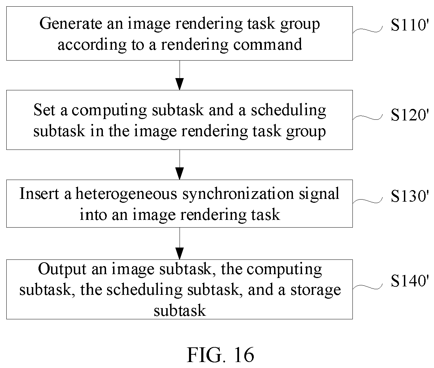

In some examples, an application vendor does not change the rendering command. In this case, the rendering command does not include parameters and the like related to a plurality of subtasks for image processing based on multi-IP coordination. In this case, step S100 includes the following sub-operations of step S110' to step S140' shown in FIG. 16.

S110': Generate an image rendering task group according to the rendering command.

In this embodiment of this application, because the application vendor does not adaptively design the rendering command, the processor 50B generates the image rendering task group in response to a rendering command input by an application. However, the image rendering task group includes the image subtask, but does not include the computing subtask, the scheduling subtask, and the like.

S120': Set the computing subtask and the scheduling subtask in the image rendering task group.

For example, setting the computing subtask in the image rendering task group includes at one of the following operations: changing at least one image subtask to the computing subtask, or adding a new computing subtask to the image rendering task group. In this embodiment of this application, the second graphics processing unit 10B and the neural-network processing unit 20B need to perform multi-IP coordination. Therefore, some image subtasks that originally need to be executed by the second graphics processing unit 10B may be allocated to the neural-network processing unit 20B for execution. In this case, some image subtasks may be changed and encapsulated into computing subtasks. In addition, compared with conventional image rendering processing, neural network algorithm processing is added. Therefore, some computing subtasks also need to be added to indicate the neural-network processing unit 20B to perform corresponding neural network algorithm processing, a related cooperative scheduling operation, and the like.

For example, to ensure fast and easy cooperative processing of the second graphics processing unit 10B and the neural-network processing unit 20B, some scheduling subtasks further need to be added, to indicate the scheduling circuit 30B to perform a corresponding scheduling operation.

S130': Insert the heterogeneous synchronization signal into an image rendering task.

S140': Output the image subtask, the computing subtask, the scheduling subtask, and the storage subtask.

For related descriptions of step S130' and step S140', refer to related descriptions of step S120 and step S130. Details are not described herein again.

In this embodiment shown in FIG. 16 of this application, because the rendering command is not changed, the image rendering task group generated by the processor 50B according to the rendering command includes only the image subtask related to image rendering, and does not include subtasks related to the neural-network processing unit 20B and the scheduling circuit 30B. In this case, the processor 50B needs to be used to set the computing subtask and the scheduling subtask. In this implementation, the application does not need to be modified, and application transparency may be achieved. To be specific, different applications may normally run and deliver rendering commands. The SDK intercepts an API or the like of a related image subtask, and performs an operation of encapsulating and modifying the image subtask into the computing subtask, an operation of inserting the heterogeneous synchronization signal, and the like. The embodiment shown in FIG. 16 of this application can adapt to different applications.

For example, the SDK may intercept the API in a manner such as field recognition, key point (view point) recognition, or the like.

An example in which the application is a game application, and an optimized image parameter is a resolution is used. The driver in the processor 50B is the super-resolution SDK. After starting to work, the super-resolution SDK intercepts an API (for example, a GLES service and a Vulkan service) or the like called by the game application through a rendering instruction, generates an API logic graph (graph), determines an execution sequence between different subtasks based on the logic graph, sets the computing subtask or the like in a corresponding processing procedure, and then inserts the heterogeneous synchronization signal into a corresponding subtask to generate an execution dependency relationship between different subtasks.

In some possible implementations, a hardware trigger circuit may be disposed in the second graphics processing unit 10B. The hardware trigger circuit is used to generate the first trigger signal in step S200. In addition, the hardware trigger circuit is used to start, in response to the fourth trigger signal, execution of the related image subtask for generating the second rendered image in step S600.

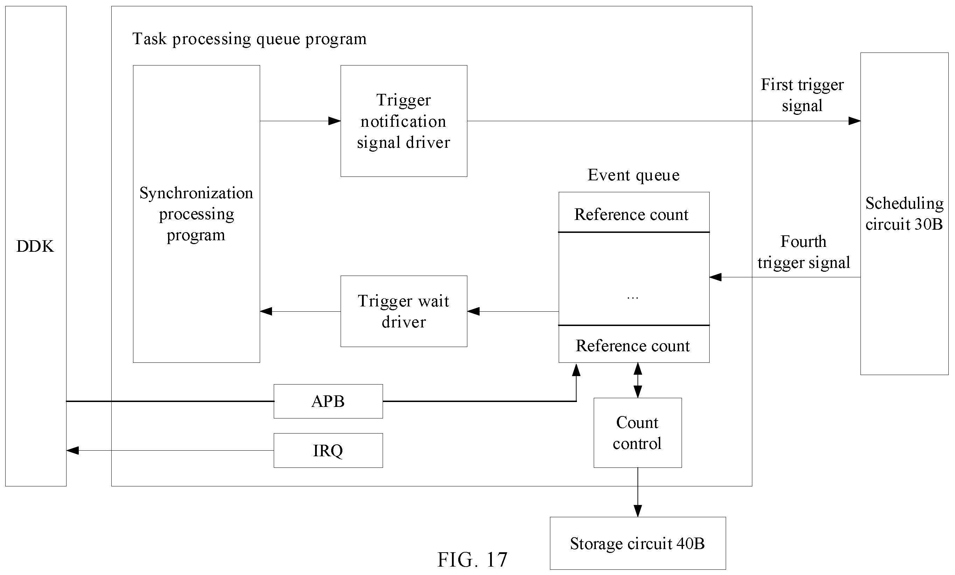

In some possible implementations, software may be used in the second graphics processing unit 10B to generate the first trigger signal in step S200. In addition, a software control manner may be used to start, in response to the fourth trigger signal, execution of the related image subtask for generating the second rendered image in step S600. For example, the driver in the processor 50B encapsulates a recording command list (CmdList) according to the rendering command delivered by the application, constructs a function entry (entry), and encapsulates, through the function entry, a related application programming interface (application programming interface, API) required for executing the image subtask. In addition, the execution dependency relationship is inserted into a related image subtask in an entry buffer (entry buffer) in a form of heterogeneous synchronization information, for example, in a form of a signal HTS_wait_instruction for waiting execution and a signal HTS_notify_instruction for notifying execution. As shown in FIG. 17, a driver development kit (driver development kit, DDK) uploads a service to the second graphics processing unit 10B. A task processing queue program (QueueM) of the second graphics processing unit 10B reads back the entry buffer, to process a synchronization relationship between different entries. When the second graphics processing unit 10B executes an image subtask (for example, outputting the first rendered image), a dependency relationship about outputting the first trigger signal is canceled, and the first trigger signal is a signal of a notification type, that is, HTS_notify_instruction. In this case, the second graphics processing unit 10B sends the first trigger signal to the scheduling circuit 30 via an internal trigger notification signal driver (Unique Signal Engine). The first trigger signal may be sent in a form of an event identifier (EventID). Similarly, the scheduling circuit 30B and the neural-network processing unit 30B also have related heterogeneous synchronization signals internally. In response to the first trigger signal, the scheduling circuit 30B executes a subsequent scheduling subtask, and schedules the neural-network processing unit 30B to execute a related computing subtask. Then, after the neural-network processing unit 30B completes execution of the related computing subtask, the scheduling circuit 30B may actively send the fourth trigger signal to the second graphics processing unit 10B. The fourth trigger signal is also sent in the form of an event identifier. An event queue (event MBX) is set inside the second graphics processing unit 10B based on the entry buffer. In the event queue, a corresponding reference count (refcnt) is set for an entry of each image subtask. When the second graphics processing unit 10B is ready to execute a subsequent image subtask (for example, may start to execute the operation of generating the second rendered image in step S600) after processing another transaction, the second graphics processing unit 10B reads back the event queue through a built-in trigger wait driver (wait engine). When the fourth trigger signal is received, the corresponding HTS_wait_instruction dependency relationship is canceled. In this case, a reference count value of an event of the corresponding image subtask is 0, that is, EventID Refcnt != 0. When the wait driver reads back a corresponding reference count value of 0, it indicates that a dependency relationship of a subsequent image subtask is canceled, and the subsequent image subtask may be executed, for example, the image subtask of generating the second rendered image in step S600 is executed. APB is a data transmission bus module, IRQ is an interrupt signal sending module, and a count control module is configured to adjust a count or the like in the event MBX.

For technical principles and technical effects of performing operations of step S200 to step S600 after operations of step S100 are performed in the embodiments shown in FIG. 13, FIG. 14, FIG. 15, FIG. 16, and FIG. 17, refer to related descriptions in the embodiments of FIG. 8, FIG. 9, FIG. 10, FIG. 11, and FIG. 12. Details are not described herein again.

Embodiments of this application provide a chip system, an image processing method, and an electronic device. First, the chip system includes a hardware scheduling circuit, a graphics processing unit, and a neural-network processing unit. The scheduling circuit indicates the graphics processing unit and the neural-network processing unit to perform multi-IP coordination processing, to generate a rendered image with a superior imaging parameter. A specific operation of multi-IP coordination processing is as follows: The graphics processing unit executes the image subtask to perform rendering processing on an imaging image to obtain the first rendered image. The neural-network processing unit performs neural network algorithm processing on the first rendered image to obtain the computing result, to complete a computing operation of parameter optimization. Finally, the graphics processing unit obtains a second rendered image based on the computing result. One or more imaging parameters of the second rendered image are superior to that or those of the first rendered image. First, the neural-network processing unit and the graphics processing unit are components independent of each other, and data path interaction and control signal interaction between the neural-network processing unit and the graphics processing unit are quite complex. In addition, software control logic of the neural-network processing unit and the graphics processing unit is simple. In this embodiment of this application, a hardware scheduling circuit is disposed, so that image processing, based on multi-IP coordination, between the neural-network processing unit and the graphics processing unit can be implemented in a simple control manner. Then, in this application, the neural-network processing unit is used to assist in improving imaging quality of a rendered image based on a neural network processing algorithm. Compared with an operation of improving imaging quality by using a more complex image rendering algorithm in the graphics processing unit, this embodiment of this application can greatly reduce image processing complexity and improve imaging quality. Second, in this embodiment of this application, a complete imaging frame may be split into a plurality of first rendered images. The graphics processing unit and the neural-network processing unit perform the multi-IP coordination processing operation on the plurality of first rendered images in a pipeline manner, so that processing performance of the graphics processing unit and the neural-network processing unit can be effectively utilized, and a processing delay of each complete frame can be reduced. Third, the chip system further includes a processor. The processor outputs an image subtask, a scheduling subtask, a computing subtask, and the like based on a rendering command delivered by an application. In this embodiment of this application, a corresponding SDK may be set in the processor, and the application may call a related image processing API by using a conventional rendering command without modifying the delivered rendering command. The SDK intercepts the related API, modifies some image subtasks, and adds some new image subtasks, computing subtasks, and scheduling subtasks. When each subtask is encapsulated, a corresponding heterogeneous synchronization signal is inserted based on a processing sequence of the subtask, and an execution dependency relationship between different subtasks is formed based on the heterogeneous synchronization signal. In this way, embodiments of this solution can adapt to different applications.

An embodiment of this application further provides a computer-readable storage medium. The computer-readable storage medium includes instructions. When the instructions are run on the electronic device (for example, the electronic device including the structure shown in FIG. 4, FIG. 5, FIG. 6, or FIG. 7) described in the foregoing embodiments, the electronic device is enabled to perform the image processing methods (for example, the image processing methods described in FIG. 8, FIG. 9, FIG. 13, FIG. 15, and FIG. 16) described in the foregoing embodiments.

The processor in embodiments of this application may be a chip. For example, the processor may be a field programmable gate array (field programmable gate array, FPGA), an application-specific integrated chip (application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a microcontroller unit (microcontroller unit, MCU), a programmable controller (programmable logic device, PLD), or another integrated chip.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the modules is merely logical function division and may be other division during actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, may be located in one device, or may be distributed on a plurality of devices. A part or all of the modules may be selected based on an actual requirement to achieve objectives of the solutions in embodiments.

In addition, functional modules in embodiments of this application may be integrated into one device, or each of the modules may exist alone physically, or two or more modules are integrated into one device.

All or a part of the foregoing embodiments may be implemented by using software, hardware, firmware, or any combination thereof. When a software program is used to implement embodiments, embodiments may be implemented all or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium that can be accessed by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A chip system, comprising a graphics processing unit, a neural-network processing unit, and a scheduling circuit, wherein
the graphics processing unit is configured to output a first rendered image based on an image subtask;
the scheduling circuit is configured to indicate, based on a scheduling subtask, the neural-network processing unit to obtain the first rendered image;
the neural-network processing unit is configured to: based on a computing subtask, perform neural network algorithm processing on the first rendered image, and output a computing result;
the scheduling circuit is further configured to indicate, based on the scheduling subtask, the graphics processing unit to obtain the computing result; and
the graphics processing unit is further configured to perform image processing on the computing result based on the image subtask to obtain a second rendered image.

2. The chip system according to claim 1, wherein
the graphics processing unit is further configured to: when outputting the first rendered image, output a first trigger signal to the scheduling circuit based on the image subtask;
the scheduling circuit is specifically configured to output a second trigger signal to the neural-network processing unit based on the scheduling subtask in response to the first trigger signal, wherein the second trigger signal indicates the neural-network processing unit to obtain the first rendered image;
the graphics processing unit is further configured to: when outputting the computing result, output a third trigger signal to the scheduling circuit based on the image subtask; and
the scheduling circuit is specifically configured to output a fourth trigger signal to the graphics processing unit based on the scheduling subtask in response to the third trigger signal, wherein the fourth trigger signal indicates the graphics processing unit to obtain the computing result.

3. The chip system according to claim 2, wherein the chip system further comprises a storage circuit;
the graphics processing unit is specifically configured to: write the first rendered image into the storage circuit; and obtain the computing result from the storage circuit in response to the fourth trigger signal; and
the neural-network processing unit is specifically configured to: based on the computing subtask in response to the second trigger signal, read the first rendered image from the first buffer, and write the computing result into the storage circuit.

4. The chip system according to any one of claims 1 to 3, wherein the graphics processing unit is further configured to:
generate an initial rendered image based on the image subtask; and
obtain a plurality of first rendered images based on the initial rendered image, wherein the plurality of first rendered images correspond to different imaging parts of the initial rendered image.

5. The chip system according to any one of claims 1 to 4, wherein the computing result is an image processing coefficient, and the graphics processing unit is further configured to:
obtain at least one preprocessed image based on the first rendered image; and
process the first rendered image and the at least one preprocessed image based on the image processing coefficient to obtain the second rendered image.

6. The chip system according to any one of claims 1 to 4, wherein the computing result is a processed image;
the graphics processing unit is further configured to obtain at least one preprocessed image based on the first rendered image; and
the neural-network processing unit is specifically configured to perform neural network algorithm processing on the first rendered image based on the at least one preprocessed image to obtain the processed image.

7. The chip system according to any one of claims 1 to 6, wherein the chip system further comprises a processor, and the processor is configured to:
output the image subtask, the computing subtask, and the scheduling subtask, wherein a heterogeneous synchronization signal is set for at least one of the image subtask, the computing subtask, or the scheduling subtask, and the heterogeneous synchronization signal indicates an execution dependency relationship between the image subtask and the scheduling subtask, or the heterogeneous synchronization signal indicates an execution dependency relationship between the computing subtask and the scheduling subtask.

8. The chip system according to claim 7, wherein the processor is further configured to:
generate an image rendering task group in response to a rendering command input by an application, wherein the image rendering task group comprises the image subtask, the computing subtask, and the scheduling subtask.

9. The chip system according to claim 7, wherein the processor is further configured to:
generate an image rendering task group in response to a rendering command input by an application, wherein the image rendering task group comprises the image subtask; and
set the computing subtask and the scheduling subtask in the image rendering task group.

10. The chip system according to claim 9, wherein the processor is specifically configured to perform at least one of the following:
changing the at least one image subtask to the computing subtask, or adding the new computing subtask to the image rendering task group.

11. The chip system according to claim 9 or 10, wherein the processor is further configured to:
add the new image subtask to the image rendering task group.

12. The chip system according to any one of claims 1 to 11, wherein the second rendered image meets at least one of the following:
a resolution of the second rendered image is greater than a resolution of the first rendered image, or a frame rate of the second rendered image is greater than a frame rate of the first rendered image.

13. An image processing method, based on a chip system, wherein the chip system comprises a graphics processing unit, a neural-network processing unit, and a scheduling circuit, and the method comprises:
outputting, by the graphics processing unit, a first rendered image based on an image subtask;
indicating, by the scheduling circuit based on a scheduling subtask, the neural-network processing unit to obtain the first rendered image;
performing, by the neural-network processing unit based on a computing subtask, neural network algorithm processing on the first rendered image, and outputting a computing result;
further indicating, by the scheduling circuit based on the scheduling subtask, the graphics processing unit to obtain the computing result; and
further performing, by the graphics processing unit, image processing on the computing result based on the image subtask to obtain a second rendered image.

14. The image processing method according to claim 13, wherein the method further comprises:
when outputting the first rendered image, outputting, by the graphics processing unit, a first trigger signal to the scheduling circuit based on the image subtask;
outputting, by the scheduling circuit, a second trigger signal to the neural-network processing unit based on the scheduling subtask in response to the first trigger signal, wherein the second trigger signal indicates the neural-network processing unit to obtain the first rendered image;
when outputting the computing result, outputting, by the graphics processing unit, a third trigger signal to the scheduling circuit based on the image subtask; and
outputting, by the scheduling circuit, a fourth trigger signal to the graphics processing unit based on the scheduling subtask in response to the third trigger signal, wherein the fourth trigger signal indicates the graphics processing unit to obtain the computing result.

15. The image processing method according to claim 13 or 14, wherein the method further comprises:
generating, by the graphics processing unit, an initial rendered image based on the image subtask, and obtaining a plurality of first rendered images based on the initial rendered image, wherein the plurality of first rendered images correspond to different imaging parts of the initial rendered image.

16. The image processing method according to any one of claims 13 to 15, wherein the computing result is an image processing coefficient;
the method further comprises: obtaining, by the graphics processing unit, at least one preprocessed image based on the first rendered image; and
outputting the second rendered image based on the computing result comprises: processing, by the graphics processing unit, the first rendered image and the at least one preprocessed image based on the image processing coefficient to obtain the second rendered image.

17. The image processing method according to any one of claims 13 to 15, wherein the computing result is a processed image;
the method further comprises: obtaining, by the graphics processing unit, at least one preprocessed image based on the first rendered image; and
performing neural network algorithm processing on the first rendered image to obtain the computing result comprises: performing, by the neural-network processing unit, neural network algorithm processing on the first rendered image based on the at least one preprocessed image to obtain the processed image.

18. The image processing method according to any one of claims 13 to 17, wherein the method further comprises:
outputting the image subtask, the computing subtask, and the scheduling subtask, wherein a heterogeneous synchronization signal is set for at least one of the image subtask, the computing subtask, or the scheduling subtask, and the heterogeneous synchronization signal indicates an execution dependency relationship between the image subtask and the scheduling subtask, or the heterogeneous synchronization signal indicates an execution dependency relationship between the computing subtask and the scheduling subtask.

19. The image processing method according to claim 18, wherein the method further comprises:
generating an image rendering task group in response to a rendering command input by an application, wherein the image rendering task group comprises the image subtask, the computing subtask, and the scheduling subtask.

20. The image processing method according to claim 18, wherein the method further comprises:
generating an image rendering task group in response to a rendering command input by an application, wherein the image rendering task group comprises the image subtask; and
setting the computing subtask and the scheduling subtask in the image rendering task group.

21. The image processing method according to claim 20, wherein setting the computing subtask in the image rendering task group comprises:
performing at least one of the following operations: changing the at least one image subtask to the computing subtask, or adding the new computing subtask to the image rendering task group.

22. The image processing method according to claim 20 or 21, wherein the method further comprises:
inserting the new image subtask into the image rendering task group.

23. The image processing method according to any one of claims 13 to 22, wherein the second rendered image meets at least one of the following:
a resolution of the second rendered image is greater than a resolution of the first rendered image, or a frame rate of the second rendered image is greater than a frame rate of the first rendered image.

24. An electronic device, comprising a circuit card and the chip system according to any one of claims 1 to 12, wherein the chip system is disposed on the circuit card.

25. A computer-readable storage medium, wherein the computer-readable storage medium comprises instructions, and when the instructions are run on the electronic device according to claim 24, the electronic device is enabled to perform the image processing method according to any one of claims 13 to 23.
